# EUROPEAN PATENT SPECIFICATION

(11) **EP 4 155 032 B1**
(45) Date of publication and mention of the grant of the patent: **26.03.2025**
(21) Application number: 21832171.9
(22) Date of filing: 29.06.2021
(51) Int. Cl.: B25F 5/00, B25B 21/00, F16H 3/44

(54) **TORQUE OUTPUT TOOL**
DREHMOMENTAUSGABEWERKZEUG
OUTIL DE SORTIE DE COUPLE

(30) Priority: 30.06.2020 CN 202010612057
(43) Date of publication of application: 29.03.2023
(73) Proprietor: Nanjing Chervon Industry Co., Ltd., Nanjing, Jiangsu 211106 (CN)
(72) Inventor: LI, Chunrui, Nanjing, Jiangsu 211106 (CN); TONG, Shubin, Nanjing, Jiangsu 211106 (CN); WANG, Hejun, Nanjing, Jiangsu 211106 (CN)
(74) Representative: Sun, Yiming
(86) International application number: PCT/CN2021/103148
(87) International publication number: WO 2022/002061

(56) References cited:
- EP-A2- 2 184 138
- WO-A1-2019/233485
- CN-A- 106 541 167
- CN-A- 110 614 393
- CN-U- 211 541 097
- CN-Y- 201 309 010
- DE-U1- 202016 107 390
- JP-A- 2005 014 145
- US-A1- 2013 167 691

## Description

This application claims priority to Chinese Patent Application No. 202010612057.2 filed Jun. 30, 2020.

### TECHNICAL FIELD

The present application relates to a power tool, for example, a torque output tool.

One example is WO 2019/233485 A1, that shows the preamble of claim 1.

### BACKGROUND

A torque output tool is used for providing torque to assist a user in daily operations. Generally, a deceleration device needs to be provided between a motor and an output shaft so that the output shaft can output an appropriate rotational speed and appropriate torque. In order that the deceleration device can provide a sufficient gear ratio for deceleration, the deceleration device generally needs to be designed as a three-layer planetary gear train. The three-layer planetary gear train is not conducive to the reduction of the whole machine of the torque output tool. If a traditional double-layer planetary gear train is provided to achieve a high gear ratio, gear strength will decrease. If the double-layer planetary gear train is provided to achieve a low gear ratio, the requirement of an output system for deceleration cannot be satisfied.

### SUMMARY

The present application provides a torque output tool in which an output shaft can output a relatively low rotational speed through the transmission of a double-layer planetary gearset, thereby reducing an overall dimension of the torque output tool. The present application provides a torque output tool. The torque output tool includes an output shaft, a motor, a transmission assembly, and a gearbox. The output shaft is used for outputting torque. The motor is used for driving the output shaft to rotate around a first axis. The transmission assembly is used for transmitting output of the motor to the output shaft. The gearbox is used for accommodating the transmission assembly. The transmission assembly includes a first planetary gearset and a second planetary gearset. The first planetary gearset includes first planet gears and a first planet carrier. The first planet gears are driven by the motor, and the first planet carrier is used for mounting the first planet gears. The second planetary gearset includes second planet gears and a second planet carrier. The second planet carrier is used for mounting the second planet gears. The transmission assembly is capable of being switched to a first state and a second state such that the transmission assembly outputs a first gear ratio or a second gear ratio separately, where the first gear ratio is greater than the second gear ratio. The motor includes a motor shaft that rotates around the first axis. The transmission assembly includes a sun gear fixedly connected to the motor shaft. A first planet gear of the first planet gears includes an external engagement portion and an internal engagement portion. The external engagement portion forms external engagement with the sun gear. The internal engagement portion is fixed connected to the external engagement portion. A length of the gearbox in an axial direction of the first axis is configured to be greater than or equal to 38 mm and less than or equal to 46 mm.

Optionally, a first-stage internal ring gear forms internal engagement with the internal engagement portion, where the first-stage internal ring gear in a radial direction of the first axis at least partially overlaps with a projection of the internal engagement portion in the radial direction of the first axis.

Optionally, the external engagement portion includes an external engagement post, the internal engagement portion includes an internal engagement post, and on any plane perpendicular to the first axis, a cross-sectional area of the external engagement post is greater than a cross-sectional area of the internal engagement post.

Optionally, the transmission assembly includes a second-stage internal ring gear engaged with the second planet gear and including a plurality of bumps; and a lock including locking teeth that mate with the plurality of bumps, where the lock is capable of moving to at least a first position and a second position, where when the lock is at the first position, the locking teeth and the plurality of bumps are staggered in a circumferential direction of the first axis; and when the lock is at the second position, the locking teeth and the plurality of bumps are disengaged in the circumferential direction of the first axis.

Optionally, the transmission assembly includes a second-stage internal ring gear including a first state and a second state, where when the second-stage internal ring gear is in the first state, the second-stage internal ring gear is engaged with the second planet gears, and when the second-stage internal ring gear is in the second state, the second-stage internal ring gear is engaged with the second planet gears and the first planet carrier at the same time; and a lock including locking teeth that mate with the second-stage internal ring gear and cause the second-stage internal ring gear to stop rotating when the second-stage internal ring gear is in the first state.

Optionally, the second planet carrier is formed with an output portion connected to the output shaft.

Optionally, a gear ratio outputted by the first planetary gearset is greater than or equal to 10 and less than or equal to 18.

Optionally, when the transmission assembly outputs the first gear ratio, a rotational speed of the output shaft is greater than or equal to 300 r/min and less than or equal to 800 r/min.

The present application provides a torque output tool. The torque output tool includes an output shaft, a motor, a transmission assembly, and a gearbox. The output shaft is used for outputting torque. The motor is used for driving the output shaft to rotate around a first axis. The transmission assembly is used for transmitting output of the motor to the output shaft. The gearbox is used for accommodating the transmission assembly. The transmission assembly includes a first planetary gearset and a second planetary gearset. The first planetary gearset includes first planet gears and a first planet carrier. The first planet gears are driven by the motor, and the first planet carrier is used for mounting the first planet gears. The second planetary gearset includes second planet gears and a second planet carrier. The second planet carrier is used for mounting the second planet gears. The transmission assembly is capable of being switched to a first state and a second state such that the transmission assembly outputs a first gear ratio or a second gear ratio separately, where the first gear ratio is greater than the second gear ratio. When the transmission assembly outputs the first gear ratio, a rotational speed of the output shaft is greater than or equal to 300 r/min and less than or equal to 800 r/min. A length of the gearbox in an axial direction of the first axis is configured to be greater than or equal to 38 mm and less than or equal to 46 mm.

Optionally, the motor includes a motor shaft that rotates around the first axis; the transmission assembly includes a sun gear fixedly connected to the motor shaft; a first planet gear of the first planet gears includes an external engagement portion that forms external engagement with the sun gear and an internal engagement portion fixedly connected to the external engagement portion.

Optionally, the transmission assembly includes a first-stage internal ring gear that forms internal engagement with the internal engagement portion, where the first-stage internal ring gear in a radial direction of the first axis at least partially overlaps with a projection of the internal engagement portion in the radial direction of the first axis.

Optionally, the external engagement portion includes an external engagement post, the internal engagement portion includes an internal engagement post, and on any plane perpendicular to the first axis, a cross-sectional area of the external engagement post is greater than a cross-sectional area of the internal engagement post.

Optionally, the transmission assembly includes a second-stage internal ring gear engaged with the second planet gear and including a plurality of bumps; and a lock including locking teeth that mate with the plurality of bumps, where the lock is capable of moving to at least a first position and a second position, where when the lock is at the first position, the locking teeth and the plurality of bumps are staggered in a circumferential direction of the first axis; and when the lock is at the second position, the locking teeth and the plurality of bumps are disengaged in the circumferential direction of the first axis.

Optionally, the transmission assembly includes a second-stage internal ring gear including a first state and a second state, where when the second-stage internal ring gear is in the first state, the second-stage internal ring gear is engaged with the second planet gears, and when the second-stage internal ring gear is in the second state, the second-stage internal ring gear is engaged with the second planet gears and the first planet carrier at the same time; and a lock including locking teeth that mate with the second-stage internal ring gear and cause the second-stage internal ring gear to stop rotating when the second-stage internal ring gear is in the first state.

Optionally, the second planet carrier is formed with an output portion connected to the output shaft.

Optionally, a gear ratio outputted by the first planetary gearset is greater than or equal to 10 and less than or equal to 18.

Optionally, the motor includes a motor shaft that rotates around the first axis and a sun gear fixedly connected to the motor shaft; where the first planet gears are engaged with the sun gear; and the second planetary gearset includes external engagement portions that form external engagement with the first planet carrier and internal engagement portions fixedly connected to the external engagement portions.

Optionally, the transmission assembly includes a second-stage internal ring gear that forms internal engagement with the internal engagement portions, where the second-stage internal ring gear at least partially overlaps with the internal engagement portions in a radial direction of the first axis.

Optionally, a torque output device further includes a torque adjustment ring sleeved on a front end of the gearbox and capable of moving forward and backward on the gearbox; an elastic member support connected to the torque adjustment ring; and an elastic member disposed on the elastic member support; where the elastic member support is at least partially sleeved on the torque adjustment ring such that the elastic member support at least partially overlaps with the torque adjustment ring in a radial direction of the first axis.

### BRIEF DESCRIPTION OF DRAWINGS

FIG. 1 is a perspective view of a torque output tool according to a first example of the present application.
FIG. 2 is a sectional view of the torque output tool in FIG. 1 when a transmission assembly is in a first state.
FIG. 3 is a sectional view of the torque output tool in FIG. 1 when a transmission assembly is in a second state.
FIG. 4 is an exploded view of some parts of the torque output tool in FIG. 1.
FIG. 5 is an exploded view of a first planetary gearset and a first-stage internal ring gear of the torque output tool in FIG. 1.
FIG. 6 is a structural view of a lock and a second-stage internal ring gear of the torque output tool in FIG. 1.
FIG. 7 is an exploded view of some parts of a torque output tool according to an example of the present application.
FIG. 8 is a plan view of a torque output tool according to an example of the present application.
FIG. 9 is a sectional view of part A of the torque output tool in FIG. 8.
FIG. 10 is a structural view of a torque adjustment ring and an elastic member support of the torque output tool in FIG. 8.
FIG. 11 is a schematic view of some parts of a transmission assembly according to an example of the present application.
FIG. 12 is a plan view of a torque output tool according to a second example of the present application.
FIG. 13 is a sectional view of the torque output tool in FIG. 12 when a lock is at a first position.
FIG. 14 is a sectional view of the torque output tool in FIG. 12 when a lock is at a second position.
FIG. 15 is an exploded view of some parts of the torque output tool in FIG. 12.

### DETAILED DESCRIPTION

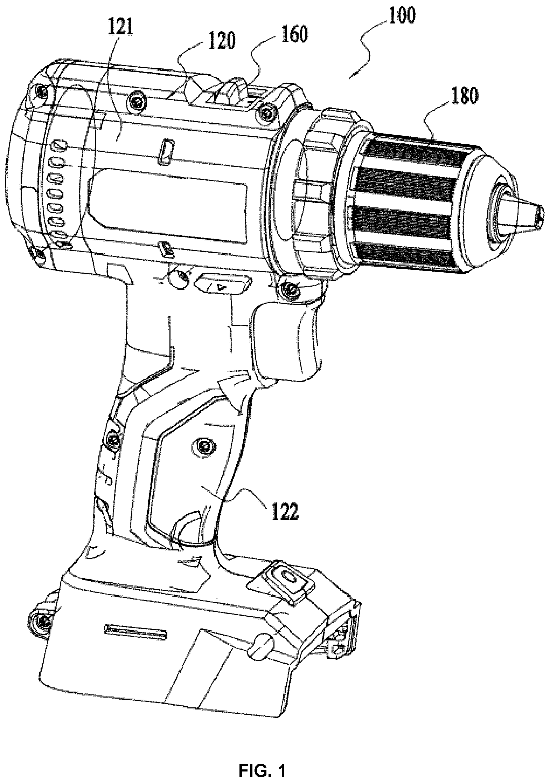

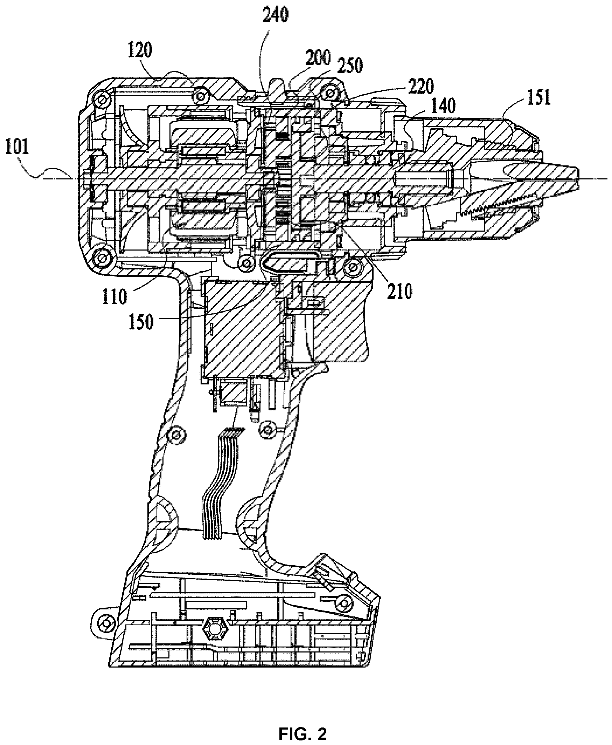

Referring to FIGS. 1 and 2, a torque output tool 100 is used for outputting torque and includes a motor 110, a housing 120, a transmission assembly 200, and an output shaft 140. The housing 120 accommodates the motor 110 and the transmission assembly 200 and supports the output shaft 140. The motor 110 is used for driving the output shaft 140 to rotate around a first axis 101, and the transmission assembly 200 connects the motor 110 to the output shaft 140 to transmit output of the motor 110 to the output shaft 140. The transmission assembly 200 has multiple states in which the output shaft 140 outputs different power and rotational speeds. A transmission state of the transmission assembly 200 is switched so that a torque magnitude and a rotational speed outputted by the output shaft 140 can be switched, thereby satisfying different operation requirements of a user.

The torque output tool 100 may be a tool such as an electric drill, an impact drill, and a screwdriver. In this example, an electric drill is used as an example. The torque output tool 100 further includes a collet device 151 for clamping a tool accessory such as a drill bit, where the collet device 151 is connected to the output shaft 140 to drive the tool accessory to perform output.

Referring to FIG. 2, the housing 120 includes a head housing 121 and a grip 122, and the motor 110 and the transmission assembly 200 are disposed in the head housing 121. The grip 122 is connected to the head housing 121 and used for the user to hold. Optionally, the head housing 121 and the grip 122 are connected in an L shape or a T shape to be convenient for the user to hold and operate. The torque output tool 100 further includes a power supply device, where the power supply device may be a battery pack or a mains connector and is configured to be connected to the housing 120. The torque output tool 100 further includes a gearbox 150 for accommodating the transmission assembly 200, where the gearbox 150 is disposed in the housing 120 and connected to or integrally formed with the head housing 121.

Referring to FIGS. 2 to 4, the transmission assembly 200 is a double-layer planetary gearset and includes a first planetary gearset 210 and a second planetary gearset 220, where the first planetary gearset 210 includes first planet gears 211 and a first planet carrier 212, and the first planet gears 211 are driven by the motor 110. The first planet carrier 212 is used for mounting the first planet gears 211. After the first planet gears 211 are mounted on the first planet carrier 212, the first planet gears 211 can rotate relative to the first planet carrier 212. The second planetary gearset 220 includes second planet gears 221 and a second planet carrier 222. The second planet carrier 222 is used for mounting the second planet gears 221. After the second planet gears 221 are mounted on the second planet carrier 222, the second planet gears 221 can rotate relative to the second planet carrier 222. The transmission assembly 200 decreases the rotational speed of the output shaft 140 through the first planetary gearset 210 and the second planetary gearset 220.

The motor 110 includes a motor shaft 111 rotatable relative to the housing 120 around the first axis 101, and the transmission assembly 200 includes a sun gear 230, where the sun gear 230 is fixedly connected to the motor shaft 111 such that the sun gear 230 and the motor shaft 111 rotate synchronously. The first planetary gearset 210 is disposed closer to the motor shaft 111 than the output shaft 140, multiple first planet gears 211 are provided and configured to be engaged with the sun gear 230, and the motor 110 drives, through the sun gear 230, the first planet gears 211 to rotate. The sun gear 230 and the first planet gears 211 form engagement teeth that transmit power. A diameter of an addendum circle of the sun gear 230 is configured to be less than a diameter of an addendum circle of the first planet gear 211 so that the number of engagement teeth of the first planet gear 211 is greater than the number of engagement teeth of the sun gear 230.

The transmission assembly 200 can be switched to a first state and a second state such that the transmission assembly 200 outputs a first gear ratio or a second gear ratio separately, where the first gear ratio is less than the second gear ratio. In this manner, when the transmission assembly 200 is in the first state or the second state, the output shaft 140 is switched to a high-speed rotation mode or a low-speed rotation mode correspondingly to provide different output states.

The transmission assembly 200 includes a first-stage internal ring gear 240 that forms a front ring gear of the transmission assembly, and internal teeth are formed on an inner circumference of the first-stage internal ring gear 240. The internal teeth of the first-stage internal ring gear 240 form engagement with the engagement teeth of the first planet gear 211. The first-stage internal ring gear 240 is fixed by the gearbox 150 and cannot rotate relative to the gearbox 150.

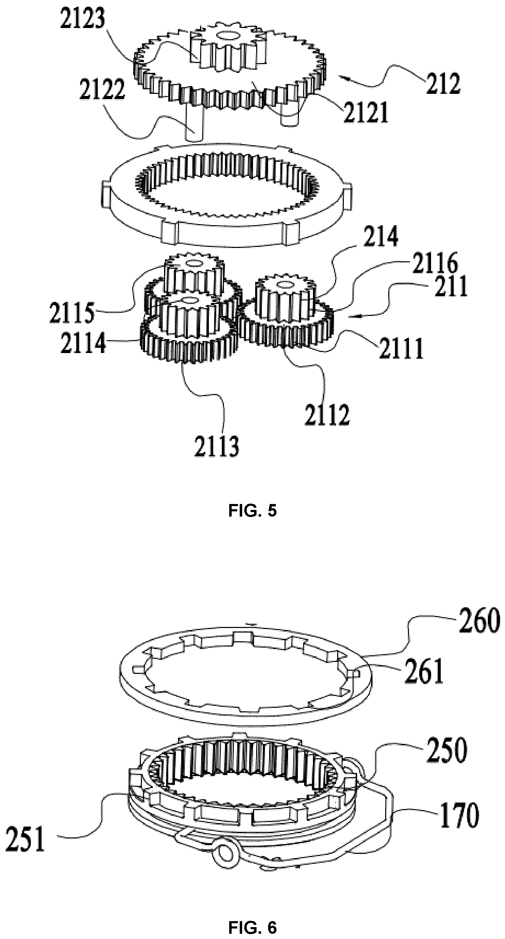

Referring to FIG. 5, the first planet gear 211 includes an external engagement portion 2111 and an internal engagement portion 2114, where the external engagement portion 2111 includes an external engagement post 2112 and external engagement teeth 2113 formed in a circumferential direction of the external engagement post 2112, the first planet gear 211 forms external engagement with the sun gear 230 through the external engagement teeth 2113, the internal engagement portion 2114 includes an internal engagement post 2115 and internal engagement teeth 2116 formed in a circumferential direction of the internal engagement post 2115, the first planet gear 211 forms internal engagement with the first-stage internal ring gear 240 through the internal engagement teeth 2116, and the first-stage internal ring gear 240 in a radial direction of the first axis 101 at least partially overlaps with a projection of the internal engagement portion 2114 in the radial direction of the first axis 101. The external engagement portion 2111 and the internal engagement portion 2114 are fixedly connected. Optionally, the external engagement post 2112 and the internal engagement post 2115 are integrally formed. The external engagement post 2112 is closer to the motor 110 than the internal engagement post 2115, and the external engagement post 2112 and the internal engagement post 2115 are arranged concentrically, that is, axes of the external engagement post 2112 and the internal engagement post 2115 are disposed on the same straight line. On each plane perpendicular to the first axis 101, a cross-sectional area of the external engagement post 2112 is greater than a cross-sectional area of the internal engagement post 2115.

The first planet carrier 212 includes a transmission plate 2121, support brackets 2122, and a first output portion 2123. The support brackets 2122 and the first output portion 2123 are formed on two sides of the transmission plate 2121 separately, and the support brackets 2122 are inserted into internal engagement portions 2114 and rotatably connected to the first planet gears 211 so that the internal engagement portions 2114 can drive the first planet carrier 212 to rotate around the first axis 101 during operation. Engagement teeth are formed on circumferential sides of both the transmission plate 2121 and the first output portion 2123, and the first output portion 2123 is used for being engaged with the second planetary gearset 220, thereby achieving the transmission connection between the first planetary gearset 210 and the second planetary gearset 220.

When the motor 110 is started, the motor 110 transmits power to the sun gear 230, and the sun gear 230 transmits the power to the external engagement portion 2111 of the first planet gear 211. Since the external engagement portion 2111 and the internal engagement portion 2114 are fixedly connected, the external engagement portion 2111 and the internal engagement portion 2114 rotate synchronously. The internal engagement portion 2114 and the first-stage internal ring gear 240 form internal engagement. Since the first-stage internal ring gear 240 is fixed to the gearbox 150, the internal engagement portions 2114 rotate around the first axis 101 to drive the first planet carrier 212 to rotate, thereby transmitting the power to the first planet carrier 212. The first-stage internal ring gear 240 in the radial direction of the first axis 101 at least partially overlaps with the projection of the internal engagement portion 2114 in the radial direction of the first axis 101 and does not interfere with a projection of the external engagement portion 2111 in the radial direction of the first axis 101. In this manner, on the premise of the same diameter of the gearbox 150, a diameter of an addendum circle of the external engagement portion 2111 can be increased accordingly, and the number of the external engagement teeth 2113 can be increased, thereby effectively increasing a gear ratio that can be provided by the first planetary gearset 210. A diameter of an addendum circle of the internal engagement portion 2114 is less than the diameter of the addendum circle of the external engagement portion 2111 so that an inner diameter of the first-stage internal ring gear 240 can be correspondingly reduced, thereby increasing the gear ratio that can be outputted by the first planetary gearset 210. Therefore, the torque output tool 100 provided in this example is not only reduced in dimension compared with a gearbox of a traditional three-layer planetary gearset but also reduced in dimension compared with a gearbox of a traditional double-layer planetary gearset so that the dimension of the whole machine is effectively reduced and the torque output tool 100 is portable. On the premise that only the double-layer planetary gearset is provided as a traditional structure, the transmission assembly 200 can provide a relatively high gear ratio and ensure the strength of gears and internal ring gears. The first planetary gearset 210 may provide a gear ratio greater than or equal to 10 and less than or equal to 18, and a dimension L1 of the gearbox 150 along an axial direction of the first axis 101 may be reduced to be greater than or equal to 38 mm and less than or equal to 46 mm. In this manner, while the dimension of the torque output tool 100 is greatly reduced, a relatively high gear ratio is provided, thereby ensuring the performance and service life of the torque output tool 100.

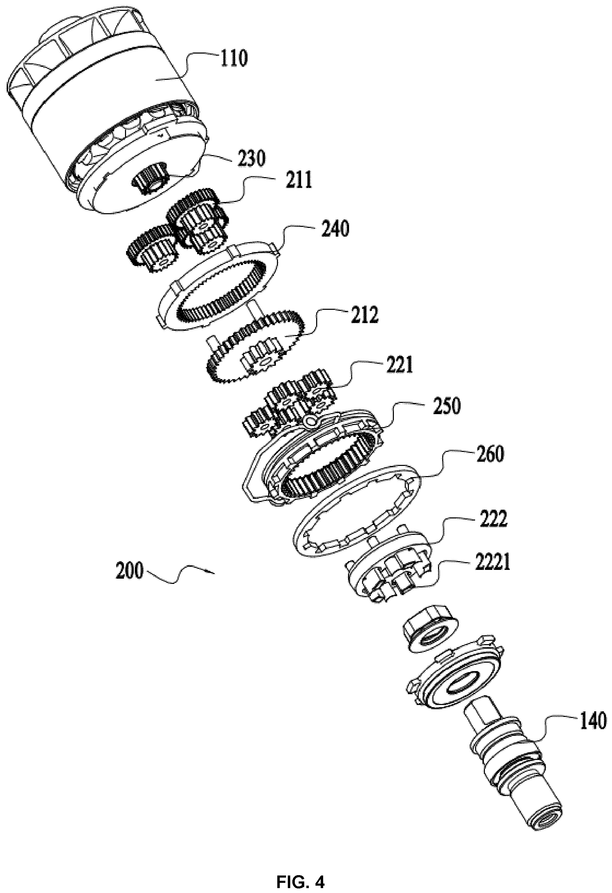

Referring to FIGS. 4 and 6, multiple second planet gears 221 are provided and form external engagement with the first output portion 2123, that is, the first output portion 2123 of the first planetary gearset 210 forms the sun gear of the second planet gears 221. The transmission assembly 200 further includes a second-stage internal ring gear 250, and internal teeth are formed on an inner circumference of the second-stage internal ring gear 250. The second-stage internal ring gear 250 and the second planet gears 221 are engaged. The second planet gears 221 are rotatably connected to the second planet carrier 222. The second planet carrier 222 is formed with a second output portion 2221 connected to the output shaft 140. The output shaft 140 includes flat portions that mate with the second output portion 2221. Part of the output shaft 140 is interposed into the second output portion 2221, thereby achieving the synchronous rotation of the output shaft 140 and the second output portion 2221.

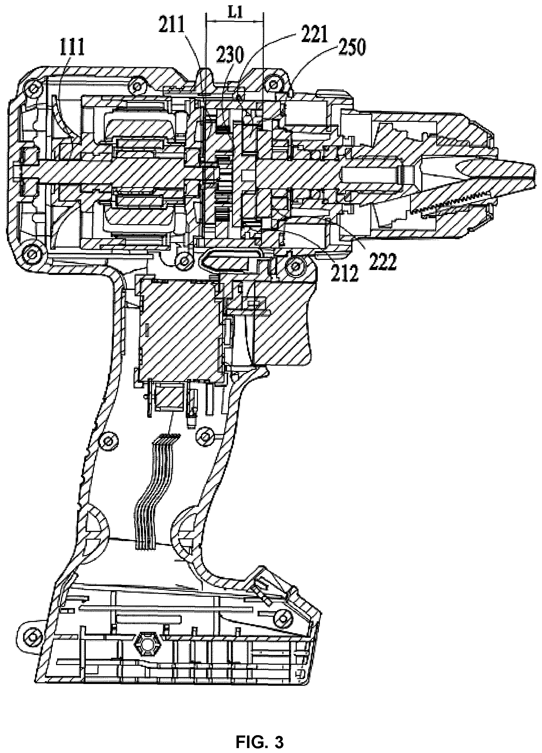

Referring to FIGS. 2 and 3, the second-stage internal ring gear 250 includes a first state and a second state. When the second-stage internal ring gear 250 is in the first state, the second-stage internal ring gear 250 is engaged with the second planet gears 221. When the second-stage internal ring gear 250 is in the second state, the second-stage internal ring gear 250 is engaged with the second planet gears 221 and the first planet carrier 212 at the same time. The transmission assembly further includes a lock 260 for causing the second-stage internal ring gear 250 to stop rotating when the second-stage internal ring gear 250 is in the second state.

The torque output tool 100 further includes a toggle switch 160 and a link 170. The toggle switch 160 is disposed on the housing 120 and used for switching the first state or the second state of the second-stage internal ring gear 250. The link 170 penetrates through the gearbox 150 and connects the toggle switch 160 to the lock 260. The link 170 may be a metal lead screw or may be a connecting structure extending from the second-stage internal ring gear 250. The second-stage internal ring gear 250 may be pushed along the axial direction of the first axis 101 through the toggle switch 160 so that when the second-stage internal ring gear 250 is in the first state, the second-stage internal ring gear 250 is engaged with the second planet gears 221, and when the second-stage internal ring gear 250 is in the second state, the second-stage internal ring gear 250 is engaged with the second planet gears 221 and the first planet carrier 212 at the same time. The second-stage internal ring gear 250 includes multiple bumps 251, and the lock 260 includes locking teeth 261 that mate with the bumps 251. When the second-stage internal ring gear 250 is pushed into the first state, the locking teeth 261 and the bumps 251 are staggered in a circumferential direction of the first axis 101. At this time, the locking teeth 261 abut against the bumps 251 so as to limit the rotation of the second-stage internal ring gear 250, that is, the second-stage internal ring gear 250 in the second state cannot rotate relative to the gearbox 150 around the first axis 101.

When the second-stage internal ring gear 250 is in the first state, the second-stage internal ring gear 250 is engaged with only the second planet gears 221, and the second-stage internal ring gear 250 cannot rotate relative to the gearbox 150. **In** this case, the second planetary gearset 220 performs deceleration, and the transmission assembly 200 outputs the first gear ratio. When the second-stage internal ring gear 250 is in the second state, the second-stage internal ring gear 250 is engaged with the second planet gears 221 and the first planet carrier at the same time. At this time, the second-stage internal ring gear 250 is disengaged from the lock 260, and the second-stage internal ring gear 250, the first planet carrier 212 and the second planet gears 221 rotate at the same speed for output. In this case, the second planetary gearset 220 does not perform deceleration, and the transmission assembly 200 outputs the second gear ratio. Therefore, the second gear ratio is less than the first gear ratio. When the transmission assembly 200 is in the first state, the output shaft 140 rotates at a low speed and outputs relatively large torque. When the transmission assembly 200 is in the second state, the output shaft 140 rotates at a relatively high speed and outputs relatively small torque. Through the preceding principles, the transmission assembly 200 can output the first gear ratio or the second gear ratio separately through the toggle switch 160, so as to switch the rotational speed of the output shaft 140.

The lock 260 may be an annular body fixedly connected to the gearbox 150 or the housing 120, and the locking teeth 261 are formed on the annular body and used for limiting the second-stage internal ring gear 250. Optionally, the lock 260 may be integrally formed with the gearbox 150 or the housing 120, and the lock 260 extending from the housing 120 or the gearbox 150 is used for limiting the second-stage internal ring gear 250.

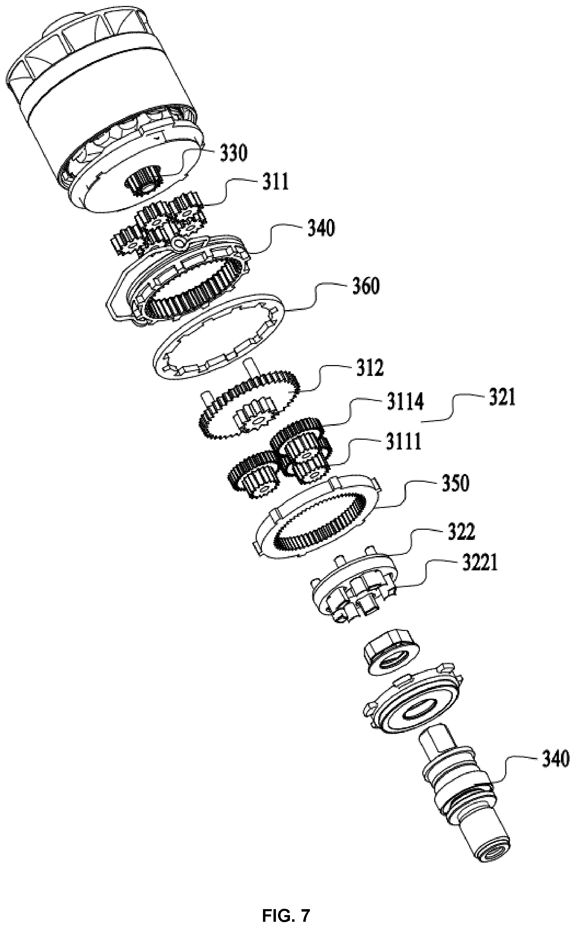

Referring to FIG. 7, in an example, first planet gears 311 are engaged with a sun gear 330, a second planet gear 321 includes an external engagement portion 3111 and an internal engagement portion 3114, and the external engagement portion 3111 forms external engagement with a first planet carrier 312. The external engagement portion 3111 and the internal engagement portion 3114 are fixedly connected. A second-stage internal ring gear 350 forms internal engagement with the internal engagement portion 3114, and the second-stage internal ring gear 350 at least partially overlaps with the internal engagement portion 3114 in a radial direction of a first axis 301. The second-stage internal ring gear 350 is fixed to a gearbox 350 and cannot rotate relative to the gearbox 350. The second-stage internal ring gear 350 and second planet gears 321 are engaged. The second planet gears 321 are rotatably connected to a second planet carrier 322. The second planet carrier 322 is formed with a second output portion 3221 connected to an output shaft 340. The output shaft 340 includes flat portions that mate with the second output portion 3221. Part of the output shaft 340 is interposed into the second output portion 3221, thereby achieving the synchronous rotation of the output shaft 340 and the second output portion 3221.

A first-stage internal ring gear 340 includes a first state and a second state. When the first-stage internal ring gear 340 is in the first state, the first-stage internal ring gear 340 is engaged with the second planet gears 321. When the first-stage internal ring gear 340 is in the second state, the first-stage internal ring gear 340 is engaged with the second planet gears 321 and the first planet carrier 312 at the same time. The second planet gear 321 further includes a lock 360 for causing the first-stage internal ring gear 340 to stop rotating when the first-stage internal ring gear 340 is in the second state.

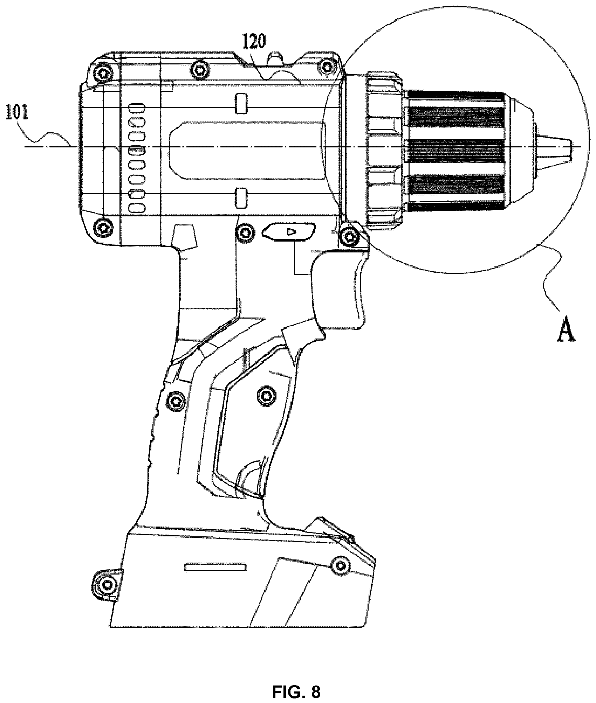

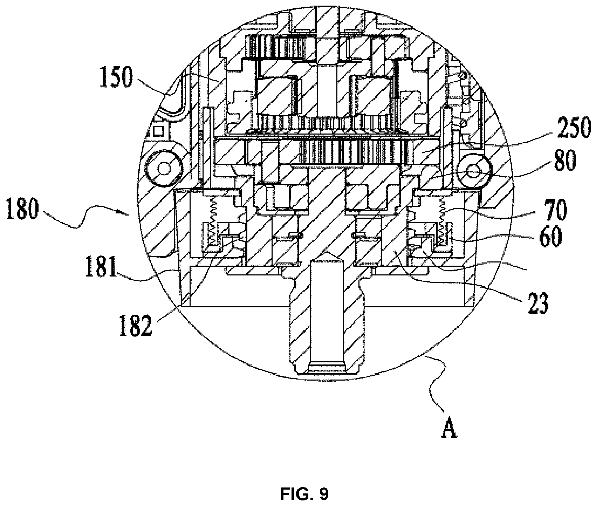

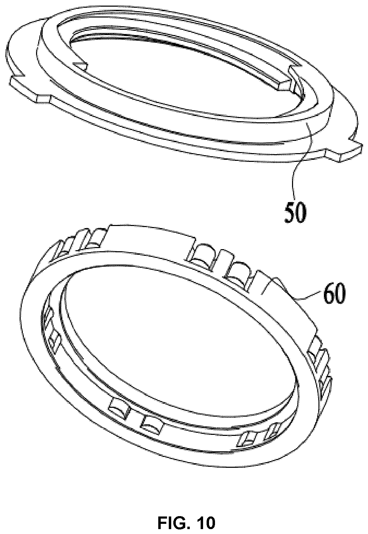

Referring to FIGS. 8 to 10, the torque output tool 100 further includes a torque adjustment assembly 180 that includes a torque adjustment ring 50 sleeved on a front end of the gearbox 150, for example, sleeved on the front of the gearbox 150. The torque adjustment ring 23 can move forward and backward on the gearbox 150. The torque adjustment ring 23 is moved so as to press against or loosen the second-stage internal ring gear 250 in the gearbox 150, thereby achieving torque adjustment.

An external thread 182 is provided at the front end of the gearbox 150, the external thread 182 is provided on a front housing 23 of the gearbox 150, and an internal thread adapted to the external thread 182 is provided on an inner wall of the torque adjustment ring 50. The internal thread mates with the external thread 182 so that the torque adjustment ring 50 is connected to the gearbox 150. When the torque adjustment ring 50 is rotated, the torque adjustment ring 50 can move forward and backward on the gearbox 150 through threads, thereby achieving the torque adjustment of the torque output tool 100.

The torque adjustment assembly 180 further includes an elastic member support 60 that is connected to the torque adjustment ring 50 and can move together with the torque adjustment ring 50. An elastic member 70 is disposed on the elastic member support 60 and connected to a shift pin 80, and the shift pin 80 abuts against the second-stage internal ring gear 250 to press against or loosen the second-stage internal ring gear 250. As shown in FIG. 3, the shift pin 80 penetrates through the housing 120 of the gearbox 150, a rear end of the shift pin 20 abuts against a front end of the second-stage internal ring gear 250 so as to press against the second-stage internal ring gear 250, a front end of the shift pin 20 abuts against the elastic member 70, the elastic member 70 is disposed on the elastic member support 60, and the elastic member support 60 is connected to the torque adjustment ring 50. When the torque adjustment ring 50 moves forward and backward along the gearbox 150 under an external force, the torque adjustment ring 50 drives the elastic member support 60 to move forward and backward, so as to press against or loosen the elastic member 70. The elastic member 70 further presses against or loosens the shift pin 80, thereby switching a pressing force applied by the shift pin 80 to the second-stage internal ring gear 250.

The elastic member support 60 is at least partially sleeved on the torque adjustment ring 50, that is, a segment of the elastic member support 60 is overlaid on the torque adjustment ring 50 in the direction of the first axis 101 so that the elastic member support 60 can at least partially overlap with the torque adjustment ring 50 in the radial direction of the first axis 101. The elastic member support 60 is nested on the torque adjustment ring 50, which can reduce a dimension of the whole machine along the direction of the first axis 101. In addition, the elastic member 70 is disposed in an axial projection of the torque adjustment ring 50 in the direction of the first axis 101 so that the elastic member 70 can be prevented from occupying a relatively large space in the radial direction, and a radial dimension of the whole machine can be reduced. In this manner, the torque output tool 100 is more portable and can be applied to more operation scenarios. A dimension of the torque adjustment assembly 180 is reduced and an overall length of the torque output tool 100 is reduced so that while the performance of the torque output tool 100 is ensured, an overall dimension of the torque output tool 100 can be greatly reduced.

The torque output tool 100 further includes a torque adjustment assembly 180 that includes a torque adjustment ring 50 sleeved on a front end of the gearbox 150, for example, sleeved on the front of the gearbox 150. The torque adjustment ring 23 can move forward and backward on the gearbox 150. The torque adjustment ring 23 is moved so as to press against or loosen the second-stage internal ring gear 250 in the gearbox 150, thereby achieving torque adjustment.

An external thread 182 is provided at the front end of the gearbox 150, the external thread 182 is provided on a front housing 23 of the gearbox 150, and an internal thread adapted to the external thread 182 is provided on an inner wall of the torque adjustment ring 50. The internal thread mates with the external thread 182 so that the torque adjustment ring 50 is connected to the gearbox 150. When the torque adjustment ring 50 is rotated, the torque adjustment ring 50 can move forward and backward on the gearbox 150 through threads, thereby achieving the torque adjustment of the torque output tool 100.

The torque adjustment assembly 180 further includes an elastic member support 60 that is connected to the torque adjustment ring 50 and can move together with the torque adjustment ring 50. An elastic member 70 is disposed on the elastic member support 60 and connected to a shift pin 80, and the shift pin 80 abuts against the second-stage internal ring gear 250 to press against or loosen the second-stage internal ring gear 250. As shown in FIG. 3, the shift pin 80 penetrates through the housing 120 of the gearbox 150, a rear end of the shift pin 20 abuts against a front end of the second-stage internal ring gear 250 so as to press against the second-stage internal ring gear 250, a front end of the shift pin 20 abuts against the elastic member 70, the elastic member 70 is disposed on the elastic member support 60, and the elastic member support 60 is connected to the torque adjustment ring 50. When the torque adjustment ring 50 moves forward and backward along the gearbox 150 under an external force, the torque adjustment ring 50 drives the elastic member support 60 to move forward and backward, so as to press against or loosen the elastic member 70. The elastic member 70 further presses against or loosens the shift pin 80, thereby switching a pressing force applied by the shift pin 80 to the second-stage internal ring gear 250.

In the present application, as shown in FIG. 3, the elastic member support 60 is at least partially sleeved on the torque adjustment ring 50, that is, a segment of the elastic member support 60 is overlaid on the torque adjustment ring 50 in the direction of the first axis 101 so that the elastic member support 60 can at least partially overlap with the torque adjustment ring 50 in the radial direction of the first axis 101. The elastic member support 60 is nested on the torque adjustment ring 50, which can reduce a dimension of the whole machine along the direction of the first axis 101. In addition, the elastic member 70 is disposed in an axial projection of the torque adjustment ring 50 in the direction of the first axis 101 so that the elastic member 70 can be prevented from occupying a relatively large space in the radial direction, and a radial dimension of the whole machine can be reduced. In this manner, the torque output tool 100 is more portable and can be applied to more operation scenarios. A dimension of the torque adjustment assembly 180 is reduced and an overall length of the torque output tool 100 is reduced so that while the performance of the torque output tool 100 is ensured, an overall dimension of the torque output tool 100 can be greatly reduced.

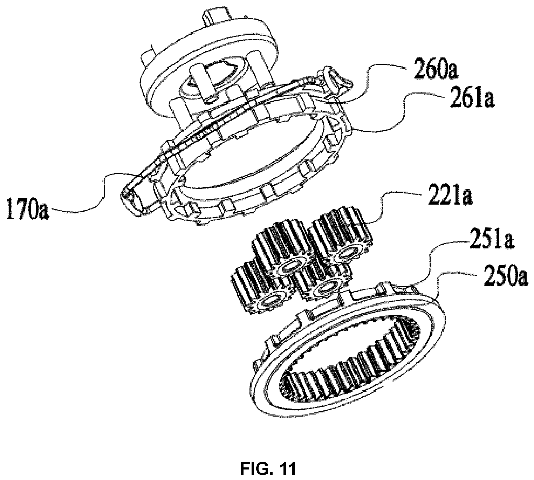

Referring to FIG. 11, in another example of the present application, a second-stage internal ring gear 250a is engaged with second planet gears 221a, the second-stage internal ring gear 250a includes multiple bumps 251a, and a lock 260a include locking teeth 261a that mate with the bumps 251a. A link 170a connects the lock 260a to a toggle switch 160a, and the lock 260a can move to at least a first position and a second position. When the lock 260a is at the first position, the locking teeth 261a and the second internal ring gear are staggered in a circumferential direction of a first axis; and when the lock 260a is at the second position, the locking teeth 261a and the bumps 251a are disengaged in the circumferential direction of the first axis. When the lock 260a is at the first position, the locking teeth 261a abut against the bumps 251a so as to limit the rotation of the second-stage internal ring gear 250a, that is, the second-stage internal ring gear 250a cannot rotate relative to the gearbox around the first axis at this time. In this case, the second-stage planetary gearset performs deceleration, and a whole of a transmission assembly 200a outputs a first gear ratio. When the lock 260a is moved to the second position, the locking teeth 261a no longer abut against the bumps 251a so that the second-stage internal ring gear 250a can rotate relative to the gearbox, the second-stage internal ring gear 250a and the second planet gears 221a rotate synchronously, and the second-stage planetary gearset does not perform deceleration. In this case, the transmission assembly 200a outputs a second gear ratio as a whole, and the first gear ratio is greater than the second gear ratio.

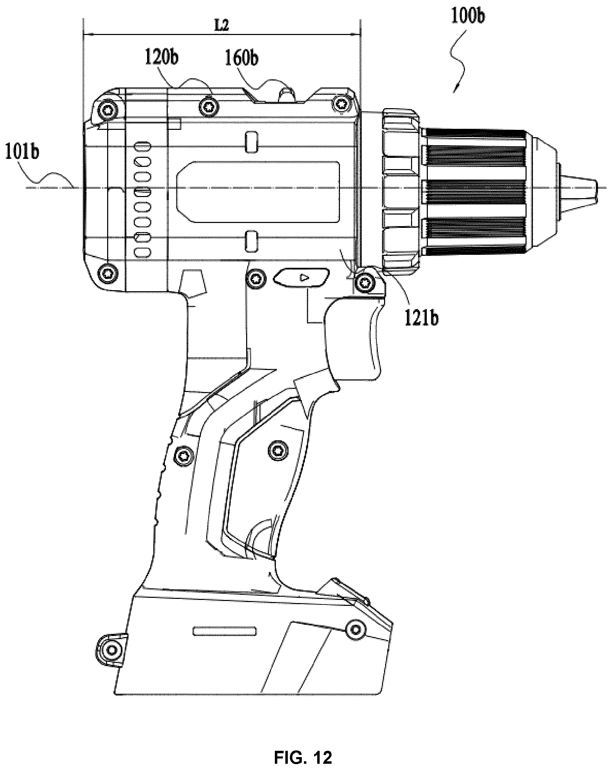

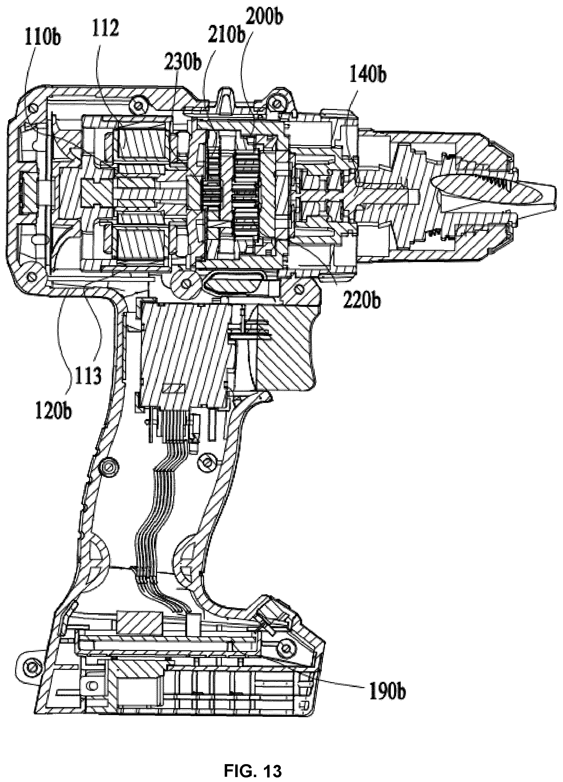

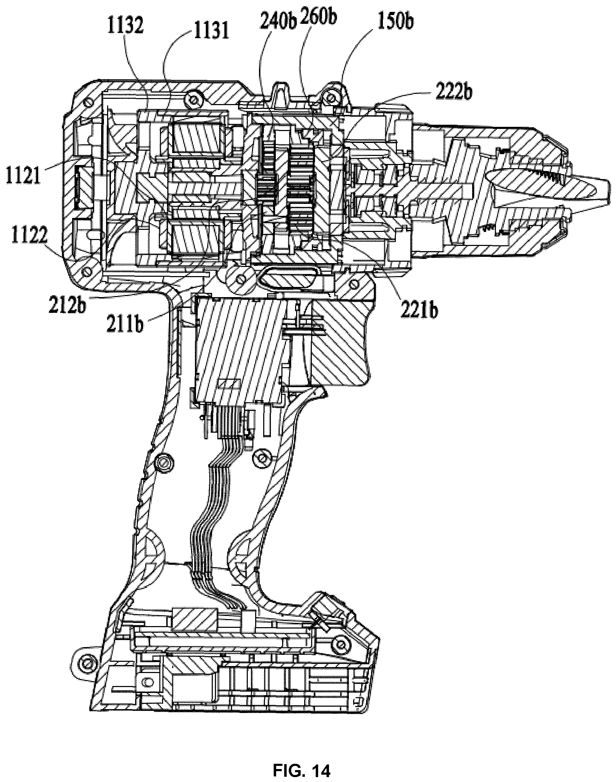

Referring to FIGS. 12 and 13, FIGS. 12 and 13 show a torque output tool 100b according to a second example of the present application. In the second example of the present application, a transmission assembly 200b of the torque output tool 100b is also a double-layer planetary gearset. Referring to FIGS. 13 and 14, the transmission assembly 200b includes a first planetary gearset 210b and a second planetary gearset 220b, where the first planetary gearset 210b includes first planet gears 211b and a first planet carrier 212b, and the second planetary gearset 220b includes second planet gears 221b and a second planet carrier 222b. The transmission assembly 200b includes a sun gear 230b, where the sun gear 230b is connected to a motor 110b and driven to rotate by the motor 110b. The first planet gears 211b are configured to be engaged with the sun gear 230b.

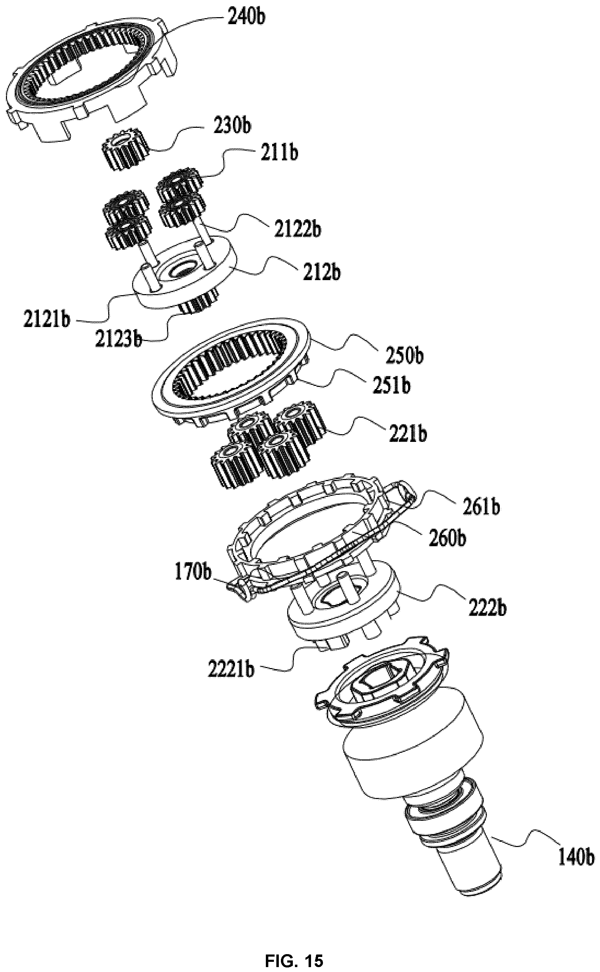

Referring to FIGS. 13 to 15, the transmission assembly 200b further includes a first-stage internal ring gear 240b fixed in a housing assembly 120b and engaged with the first planet gears 211b. Multiple first planet gears 211b are provided and configured to be engaged with the sun gear 230b, and the motor 110b drives, through the sun gear 230b, the first planet gears 211b to rotate. The sun gear 230b and the first planet gears 211b form engagement teeth that transmit power. A diameter of an addendum circle of the sun gear 230b is configured to be less than a diameter of an addendum circle of the first planet gear 211b so that the number of engagement teeth of the first planet gear 211b is greater than the number of engagement teeth of the sun gear 230b.

The first planet carrier 212b includes a transmission plate 2121b, support brackets 2122b, and a first output portion 2123b. The support brackets 2122b and the first output portion 2123b are formed on two sides of the transmission plate 2121b separately, and the support brackets 2122b are inserted into the first planet gears 211b and rotatably connected to the first planet gears 211b so that the first planet gears 211b can drive the first planet carrier to rotate around a first axis 101b during operation. Engagement teeth are formed on circumferential sides of both the transmission plate 2121b and the first output portion 2123b, and the first output portion 2123b is used for being engaged with the second planetary gearset 220b, thereby achieving the transmission connection between the first planetary gearset 210b and the second planetary gearset 220b.

Multiple second planet gears 221b are provided and form external engagement with the first output portion 2123b, that is, the first output portion 2123b of the first planetary gearset 210b forms the sun gear of the second planet gears 221b. The transmission assembly 200b further includes a second-stage internal ring gear 250b, and internal teeth are formed on an inner circumference of the second-stage internal ring gear 250b. The second-stage internal ring gear 250b and the second planet gears 221b are engaged. The second planet gears 221b are rotatably connected to the second planet carrier 222b. The second planet carrier 222b is formed with a second output portion 2221b connected to an output shaft 140b. The output shaft 140b includes flat portions that mate with the second output portion 2221b. Part of the output shaft 140b is interposed into the second output portion 2221b, thereby achieving the synchronous rotation of the output shaft 140b and the second output portion 2221b.

The second-stage internal ring gear 250b is engaged with the second planet gears 221b, the second-stage internal ring gear 250b includes multiple bumps 251b, and a lock 260b includes locking teeth 261b that mate with the bumps 251b. A link 170b connects the lock 260b to a toggle switch 160b, and the lock 260b can move to at least a first position and a second position. When the lock 260b is at the first position, the locking teeth 261b and the second internal ring gear are staggered in a circumferential direction of the first axis 101b; and when the lock 260b is at the second position, the locking teeth 261b and the bumps 251b are disengaged in the circumferential direction of the first axis 101b. When the lock 260b is at the first position, the locking teeth 261b abut against the bumps 251b so as to limit the rotation of the second-stage internal ring gear 250b, that is, the second-stage internal ring gear 250b cannot rotate relative to a gearbox 150b around the first axis 101b at this time. In this case, the second-stage planetary gearset performs deceleration, and the transmission assembly 200b outputs a first gear ratio as a whole. When the lock 260b is moved to the second position, the locking teeth 261b no longer abut against the bumps 251b so that the second-stage internal ring gear 250b can rotate relative to the gearbox 150b, the second-stage internal ring gear 250b and the second planet gears 221b rotate synchronously, and the second-stage planetary gearset does not perform deceleration. In this case, the transmission assembly 200b outputs a second gear ratio as a whole, and the first gear ratio is greater than the second gear ratio.

The lock 260b may include an annular body provided with the locking teeth 261b. The lock 260b is formed with a mating portion that mates with the gearbox 150b so that the housing 120b mates with the mating portion of the lock 260b so as to limit the rotation of the lock 260b relative to the housing 120b, and the lock 260b is fixed to the gearbox 150b and can move to the first position and the second position relative to the gearbox 150b.

Optionally, the lock 260b is fixed by the housing 120b and directly formed with the mating portion that mates with the housing 120b so that the housing 120b mates with the mating portion of the lock 260b so as to limit the rotation of the lock 260b relative to the housing 120b, and the lock 260b can move to the first position or the second position relative to the housing 120b along an axial direction of the first axis 101b. The housing 120b is provided with a through hole for part of the lock 260b to penetrate through the housing 120b so that the user can toggle the lock 260b to switch the first position or the second position where the lock 260b is located.

In the second example, the provided transmission assembly 200b completes the transmission of power through the double-layer planetary gearset so that a dimension of the gearbox 150b can be effectively reduced, and a position of the lock 260b is switched so as to switch a transmission coefficient, which is stable and reliable and can prolong the service life of the transmission assembly 200b. However, a relatively high gear ratio cannot be provided only through the double-layer planetary gearset provided in this example, so it cannot be ensured that the output shaft 140b can output sufficient torque. To make up for an insufficient deceleration capability of planet gears in two layers, in this example, a specific motor 110b is provided to mate with the transmission assembly 200b, so as to ensure the decelerated transmission of the motor 110b. Thus, the torque outputted by the output shaft 140b can satisfy operation requirements of the torque output tool 100b.

The motor 110b includes a stator assembly 112 and a rotor assembly 113, where the stator assembly 112 includes a stator bracket 1121 and stator windings 1122, and the rotor assembly 113 includes a rotor sleeve 1131 and permanent magnets 1132. Slots for fixing the permanent magnets 1132 are formed on the rotor sleeve 1131. The permanent magnets 1132 are embedded into the slots and mounted on the rotor sleeve 1131. The stator windings 1122 are configured to be wound onto the stator bracket 1121. The rotor assembly 113 is configured to be sleeved outside the stator assembly 112 and rotatable relative to the stator assembly 112. After the motor 110b is energized, the rotor assembly 113 rotates relative to the stator assembly 112, and the rotor assembly 113 includes a motor shaft 111b connected to the rotor sleeve 1131 so that when the motor 110b is in operation, the motor shaft 111b rotates around the first axis 101b to drive the output shaft 140b.

In this example, multiple permanent magnets 1132 are provided, and the number of poles formed by the permanent magnets 1132 is configured to be not less than four pairs, so as to relatively adjust an output rotational speed of the motor 110b. The output rotational speed of the motor 110b is configured to be greater than or equal to 6400 r/min and less than or equal to 30000 r/min, so that the output rotational speed of the motor 110b matches the transmission capability of the transmission assembly 200b provided in this example, so that the torque output tool 100b has a reasonable output rotational speed and reasonable torque, and can reduce the size of the head housing 121b, and the strength of the transmission assembly 200b, so that the whole machine is easy to operate and prolong its life. Optionally, the transmission assembly 200b in the first example can cooperate with the motor in this example, so as to reduce the transmission ratio requirement of the transmission assembly 200b, thereby reducing the size of the transmission assembly 200b.

Optionally, the power tool further includes a torque adjustment member 181 and a controller 190, where the controller 190 is connected to a power supply device and the motor 110b. The controller 190 receives an electrical signal sent by the torque adjustment member 181 and controls output torque of the motor 110b so that a mechanical torque adjustment assembly does not need to be provided at a front end of the head housing 121b, and the overall dimension of the torque output tool 100b can be reduced. Through the preceding various examples provided in the present application, the torque output tool provided in the present application uses the double-layer planetary gearset for transmission so that the length of the head housing in the axial direction of the first axis is reduced, and the torque output tool can output a relatively low rotational speed. In this manner, while the performance of the torque output tool is ensured, the overall dimension of the torque output tool is reduced. As shown in FIG. 12, through the preceding examples of the present application, a dimension L2 of the head housing (excluding the torque adjustment assembly) of the torque output tool in the axial direction of the first axis can be greater than or equal to 80 mm and less than or equal to 120 mm.

## Claims

1. A torque output tool (100, 100b), comprising:
an output shaft (140) for outputting torque;
a motor (110) for driving the output shaft to rotate around a first axis (101);
a housing (120) for supporting the motor;
a transmission assembly (200) for transmitting output of the motor to the output shaft; and
a gearbox (150) for accommodating at least a portion of the transmission assembly;
wherein the transmission assembly comprises:
a first planetary gearset (210) comprising first planet gears (211) and a first planet carrier (212), wherein the first planet gears are driven by the motor, and the first planet carrier is used for mounting the first planet gears; and
a second planetary gearset (220) comprising second planet gears (221) and a second planet carrier (222), wherein the second planet carrier is used for mounting the second planet gears;
wherein the transmission assembly is capable of being switched to a first state and a second state such that the transmission assembly outputs a first gear ratio or a second gear ratio separately, wherein the first gear ratio is greater than the second gear ratio;
wherein the motor comprises:
a motor shaft (111) that rotates around the first axis;
wherein the transmission assembly comprises:
a sun gear (230) fixedly connected to the motor shaft;
wherein each of the first planet gears comprises:
an external engagement portion (2111) that forms external engagement with the sun gear; and
an internal engagement portion (2114) fixedly connected to the external engagement portion; **characterized in that**
a length of the gearbox in an axial direction of the first axis is greater than or equal to 38 mm and less than or equal to 46 mm.

2. The torque output tool of claim 1, wherein the transmission assembly comprises a first-stage internal ring gear (240) that forms internal engagement with the internal engagement portion, and a projection of the first-stage internal ring gear in a radial direction of the first axis at least partially overlaps with a projection of the internal engagement portion in the radial direction of the first axis.

3. The torque output tool of claim 2, wherein the external engagement portion comprises an external engagement post (2112), the internal engagement portion comprises an internal engagement post (2115), and on a plane perpendicular to the first axis, a cross-sectional area of the external engagement post is greater than a cross-sectional area of the internal engagement post.

4. The torque output tool of claim 2, wherein the transmission assembly comprises a second-stage internal ring gear (250) engaged with the second planet gears and comprising a plurality of bumps (251); and a lock (260) comprising locking teeth (261) that mate with the plurality of bumps, wherein the lock is capable of moving to at least a first position and a second position, the locking teeth and the plurality of bumps are staggered in a circumferential direction of the first axis when the lock is at the first position, and the locking teeth and the plurality of bumps are disengaged in the circumferential direction of the first axis when the lock is at the second position.

5. The torque output tool of claim 4, wherein the second planet carrier is formed with an output portion (2221) connected to the output shaft.

6. The torque output tool of claim 1, wherein the transmission assembly comprises a second-stage internal ring gear (250) comprising a first state and a second state, wherein when the second-stage internal ring gear is in the first state, the second-stage internal ring gear is engaged with the second planet gears, and when the second-stage internal ring gear is in the second state, the second-stage internal ring gear is engaged with the second planet gears and the first planet carrier at the same time; and a lock (260) comprising locking teeth that mate with the second-stage internal ring gear and cause the second-stage internal ring gear to stop rotating when the second-stage internal ring gear is in the first state.

7. The torque output tool of claim 6, further comprising a toggle switch (160) disposed on a housing and used for switching the lock to a first position or a second position; and a link (170) that penetrates through the gearbox and connects the toggle switch to the lock.

8. The torque output tool of claim 1, wherein a gear ratio outputted by the first planetary gearset is greater than or equal to 10 and less than or equal to 18.

9. The torque output tool of claim 1, wherein when the transmission assembly outputs the first gear ratio, a rotational speed of the output shaft is greater than or equal to 300 r/min and less than or equal to 800 r/min.

10. The torque output tool of claim 1, further comprising a torque adjustment ring (50) sleeved on a front end of the gearbox and capable of moving forward and backward on the gearbox; an elastic member support (60) connected to the torque adjustment ring; and an elastic member (70) disposed on the elastic member support; wherein the elastic member support is at least partially sleeved on the torque adjustment ring such that the elastic member support at least partially overlaps with the torque adjustment ring in the radial direction of the first axis.

11. The torque output tool of claim 1, wherein the motor comprises a stator assembly (112) and a rotor assembly (113), the rotor assembly comprises a rotor sleeve (1131) and permanent magnets (1132), the permanent magnets are mounted on the rotor sleeve, the rotor sleeve is configured to be sleeved outside the stator assembly, and an output rotational speed of the motor is configured to be greater than or equal to 6400 r/min and less than or equal to 30000 r/min.

12. The torque output tool of claim 11, wherein the first gear ratio is greater than or equal to 16 and less than or equal to 36.

13. The torque output tool of claim 1, wherein the housing comprises a head housing (121) in which the motor and the transmission assembly are disposed; and a grip (122) connected to the head housing and used for a user to hold; wherein a length of the head housing in the axial direction of the first axis is configured to be greater than or equal to 80 mm and less than or equal to 120 mm.

14. The torque output tool of claim 1, wherein a diameter of an addendum circle of the sun gear (230) is less than a diameter of an addendum circle of the each of the first planet gears (211).

15. The torque output tool of claim 1, wherein a number of engagement teeth of the each of the first planet gears (211) is greater than a number of engagement teeth of the sun gear (230).

## Patentansprüche

1. Ein Drehmoment-Abgabewerkzeug (100, 100b), umfassend:
eine Abtriebswelle (140) zur Abgabe eines Drehmoments;
einen Motor (110) zum Antreiben der Abtriebswelle zur Rotation um eine erste Achse (101);
ein Gehäuse (120) zur Aufnahme des Motors;
eine Getriebeanordnung (200) zur Übertragung der Ausgangsleistung des Motors auf die Abtriebswelle; und
ein Getriebegehäuse (150) zur Aufnahme zumindest eines Teils der Getriebeanordnung;
wobei die Getriebeanordnung umfasst:
ein erstes Planetengetriebe (210), das erste Planetenräder (211) und einen ersten Planetenträger (212) umfasst, wobei die ersten Planetenräder durch den Motor angetrieben werden und der erste Planetenträger zur Aufnahme der ersten Planetenräder dient; und
ein zweites Planetengetriebe (220), das zweite Planetenräder (221) und einen zweiten Planetenträger (222) umfasst, wobei der zweite Planetenträger zur Aufnahme der zweiten Planetenräder dient;
wobei die Getriebeanordnung zwischen einem ersten Zustand und einem zweiten Zustand umschaltbar ist, sodass die Getriebeanordnung entweder ein erstes Übersetzungsverhältnis oder ein zweites Übersetzungsverhältnis ausgibt, wobei das erste Übersetzungsverhältnis größer als das zweite Übersetzungsverhältnis ist;
wobei der Motor umfasst:
eine Motorwelle (111), die sich um die erste Achse dreht;
wobei die Getriebeanordnung umfasst:
ein Sonnenrad (230), das fest mit der Motorwelle verbunden ist;
wobei jedes der ersten Planetenräder umfasst:
einen äußeren Eingriffsabschnitt (2111), der einen äußeren Eingriff mit dem Sonnenrad bildet; und
einen inneren Eingriffsabschnitt (2114), der fest mit dem äußeren Eingriffsabschnitt verbunden ist;
**dadurch gekennzeichnet, dass**
eine Länge des Getriebegehäuses in axialer Richtung der ersten Achse größer oder gleich 38 mm und kleiner oder gleich 46 mm ist.

2. Das Drehmoment-Abgabewerkzeug nach Anspruch 1, wobei die Getriebeanordnung ein erstes Innenringzahnrad (240) umfasst, das einen inneren Eingriff mit dem inneren Eingriffsabschnitt bildet, und eine Projektion des ersten Innenringzahnrads in einer radialen Richtung der ersten Achse sich zumindest teilweise mit einer Projektion des inneren Eingriffsabschnitts in der radialen Richtung der ersten Achse überlappt.

3. Das Drehmoment-Abgabewerkzeug nach Anspruch 2, wobei der äußere Eingriffsabschnitt einen äußeren Eingriffsstift (2112) umfasst, der innere Eingriffsabschnitt einen inneren Eingriffsstift (2115) umfasst, und wobei in einer Ebene senkrecht zur ersten Achse eine Querschnittsfläche des äußeren Eingriffsstifts größer ist als eine Querschnittsfläche des inneren Eingriffsstifts.

4. Das Drehmoment-Abgabewerkzeug nach Anspruch 2, wobei die Getriebeanordnung ein zweites Innenringzahnrad (250) umfasst, das mit den zweiten Planetenrädern im Eingriff steht und eine Mehrzahl von Erhebungen (251) aufweist; und eine Verriegelung (260) umfasst, die Verriegelungszähne (261) aufweist, die mit der Mehrzahl von Erhebungen zusammenwirken, wobei die Verriegelung zwischen zumindest einer ersten Position und einer zweiten Position beweglich ist, die Verriegelungszähne und die Mehrzahl von Erhebungen in einer Umfangsrichtung der ersten Achse versetzt sind, wenn sich die Verriegelung in der ersten Position befindet, und die Verriegelungszähne und die Mehrzahl von Erhebungen in der Umfangsrichtung der ersten Achse außer Eingriff sind, wenn sich die Verriegelung in der zweiten Position befindet.

5. Das Drehmoment-Abgabewerkzeug nach Anspruch 4, wobei der zweite Planetenträger mit einem Abtriebsabschnitt (2221) ausgebildet ist, der mit der Abtriebswelle verbunden ist.

6. Das Drehmoment-Abgabewerkzeug nach Anspruch 1, wobei die Getriebeanordnung ein zweites Innenringzahnrad (250) umfasst, das einen ersten Zustand und einen zweiten Zustand aufweist, wobei, wenn sich das zweite Innenringzahnrad im ersten Zustand befindet, das zweite Innenringzahnrad mit den zweiten Planetenrädern im Eingriff steht, und wenn sich das zweite Innenringzahnrad im zweiten Zustand befindet, das zweite Innenringzahnrad gleichzeitig mit den zweiten Planetenrädern und dem ersten Planetenträger im Eingriff steht; und eine Verriegelung (260) umfasst, die Verriegelungszähne aufweist, die mit dem zweiten Innenringzahnrad zusammenwirken und bewirken, dass das zweite Innenringzahnrad nicht rotiert, wenn sich das zweite Innenringzahnrad im ersten Zustand befindet.

7. Das Drehmoment-Abgabewerkzeug nach Anspruch 6, ferner umfassend einen Kippschalter (160), der an einem Gehäuse angeordnet ist und zum Umschalten der Verriegelung in eine erste Position oder eine zweite Position dient; und eine Verbindung (170), die durch das Getriebegehäuse verläuft und den Kippschalter mit der Verriegelung verbindet.

8. Das Drehmoment-Abgabewerkzeug nach Anspruch 1, wobei ein von dem ersten Planetengetriebe ausgegebenes Übersetzungsverhältnis größer oder gleich 10 und kleiner oder gleich 18 ist.

9. Das Drehmoment-Abgabewerkzeug nach Anspruch 1, wobei, wenn die Getriebeanordnung das erste Übersetzungsverhältnis ausgibt, eine Drehzahl der Abtriebswelle größer oder gleich 300 U/min und kleiner oder gleich 800 U/min ist.

10. Das Drehmoment-Abgabewerkzeug nach Anspruch 1, ferner umfassend einen Drehmomenteinstellring (50), der auf einem vorderen Ende des Getriebegehäuses aufgesteckt ist und sich entlang des Getriebegehäuses vor- und zurückbewegen kann; ein elastisches Tragelement (60), das mit dem Drehmomenteinstellring verbunden ist; und ein elastisches Element (70), das auf dem elastischen Tragelement angeordnet ist, wobei das elastische Tragelement zumindest teilweise auf dem Drehmomenteinstellring aufgesteckt ist, sodass das elastische Tragelement sich in radialer Richtung der ersten Achse zumindest teilweise mit dem Drehmomenteinstellring überlappt.

11. Das Drehmoment-Abgabewerkzeug nach Anspruch 1, wobei der Motor eine Statorbaugruppe (112) und eine Rotorbaugruppe (113) umfasst, wobei die Rotorbaugruppe eine Rotorhülse (1131) und Dauermagnete (1132) umfasst, die Dauermagnete auf der Rotorhülse montiert sind, die Rotorhülse dazu konfiguriert ist, über die Statorbaugruppe gestülpt zu werden, und eine Ausgangsdrehzahl des Motors größer oder gleich 6400 U/min und kleiner oder gleich 30000 U/min ist.

12. Das Drehmoment-Abgabewerkzeug nach Anspruch 11, wobei das erste Übersetzungsverhältnis größer oder gleich 16 und kleiner oder gleich 36 ist.

13. Das Drehmoment-Abgabewerkzeug nach Anspruch 1, wobei das Gehäuse ein Kopfgehäuse (121) umfasst, in dem der Motor und die Getriebeanordnung angeordnet sind; und einen Griff (122), der mit dem Kopfgehäuse verbunden ist und zum Festhalten durch einen Benutzer dient; wobei eine Länge des Kopfgehäuses in axialer Richtung der ersten Achse größer oder gleich 80 mm und kleiner oder gleich 120 mm ist.

14. Das Drehmoment-Abgabewerkzeug nach Anspruch 1, wobei ein Durchmesser eines Kopfkreises des Sonnenrads (230) kleiner ist als ein Durchmesser eines Kopfkreises jedes der ersten Planetenräder (211).

15. Das Drehmoment-Abgabewerkzeug nach Anspruch 1, wobei eine Anzahl der Eingriffszähne jedes der ersten Planetenräder (211) größer ist als eine Anzahl der Eingriffszähne des Sonnenrads (230).

## Revendications

1. Un outil de sortie de couple (100, 100b), comprenant :
un arbre de sortie (140) configuré pour délivrer un couple ;
un moteur (110) configuré pour entraîner l'arbre de sortie en rotation autour d'un premier axe (101) ;
un boîtier (120) configuré pour supporter le moteur ;
un ensemble de transmission (200) configuré pour transmettre la puissance du moteur à l'arbre de sortie ; et
un carter d'engrenage (150) configuré pour loger au moins une partie de l'ensemble de transmission ;
l'ensemble de transmission comprenant :
un premier train planétaire (210) comprenant des premiers satellites (211) et un premier porte-satellites (212), les premiers satellites étant entraînés par le moteur, et le premier porte-satellites étant destiné à supporter les premiers satellites ; et
un second train planétaire (220) comprenant des seconds satellites (221) et un second porte-satellites (222), le second porte-satellites étant destiné à supporter les seconds satellites ;
l'ensemble de transmission étant capable d'être commuté entre un premier état et un second état de sorte que l'ensemble de transmission délivre un premier rapport de transmission ou un second rapport de transmission séparément, le premier rapport de transmission étant supérieur au second rapport de transmission ;
le moteur comprenant :
un arbre moteur (111) tournant autour du premier axe ;
l'ensemble de transmission comprenant :
un pignon solaire (230) fixé de manière solidaire à l'arbre moteur ;
chacun des premiers satellites comprenant :
une partie d'engagement externe (2111) formant un engagement externe avec le pignon solaire ; et
une partie d'engagement interne (2114) fixée de manière solidaire à la partie d'engagement externe ;
**caractérisé en ce que**
une longueur du carter d'engrenage dans une direction axiale du premier axe est supérieure ou égale à 38 mm et inférieure ou égale à 46 mm.

2. L'outil de sortie de couple selon la revendication 1, dans lequel l'ensemble de transmission comprend une première couronne interne (240) formant un engagement interne avec la partie d'engagement interne, et une projection de la première couronne interne dans une direction radiale du premier axe chevauche au moins partiellement une projection de la partie d'engagement interne dans la direction radiale du premier axe.

3. L'outil de sortie de couple selon la revendication 2, dans lequel la partie d'engagement externe comprend un tenon d'engagement externe (2112), la partie d'engagement interne comprend un tenon d'engagement interne (2115), et, sur un plan perpendiculaire au premier axe, une surface en coupe transversale du tenon d'engagement externe est supérieure à une surface en coupe transversale du tenon d'engagement interne.

4. L'outil de sortie de couple selon la revendication 2, dans lequel l'ensemble de transmission comprend une seconde couronne interne (250) en prise avec les seconds satellites et comprenant une pluralité de bosses (251) ; et un verrou (260) comprenant des dents de verrouillage (261) configurées pour s'engager avec la pluralité de bosses, le verrou étant apte à se déplacer entre au moins une première position et une seconde position, les dents de verrouillage et la pluralité de bosses étant décalées dans une direction circonférentielle du premier axe lorsque le verrou est en première position, et les dents de verrouillage et la pluralité de bosses étant désengagées dans la direction circonférentielle du premier axe lorsque le verrou est en seconde position.

5. L'outil de sortie de couple selon la revendication 4, dans lequel le second porte-satellites est formé avec une portion de sortie (2221) connectée à l'arbre de sortie.

6. L'outil de sortie de couple selon la revendication 1, dans lequel l'ensemble de transmission comprend une seconde couronne interne (250) ayant un premier état et un second état, dans lequel, lorsque la seconde couronne interne est en premier état, la seconde couronne interne est en prise avec les seconds satellites, et lorsque la seconde couronne interne est en second état, la seconde couronne interne est en prise avec les seconds satellites et le premier porte-satellites en même temps ; et un verrou (260) comprenant des dents de verrouillage configurées pour s'engager avec la seconde couronne interne et empêcher la seconde couronne interne de tourner lorsque celle-ci est en premier état.

7. L'outil de sortie de couple selon la revendication 6, comprenant en outre un commutateur à bascule (160) disposé sur un boîtier et utilisé pour commuter le verrou entre une première position et une seconde position ; et une liaison (170) traversant le carter d'engrenage et reliant le commutateur à bascule au verrou.

8. L'outil de sortie de couple selon la revendication 1, dans lequel un rapport de transmission délivré par le premier train planétaire est supérieur ou égal à 10 et inférieur ou égal à 18.

9. L'outil de sortie de couple selon la revendication 1, dans lequel, lorsque l'ensemble de transmission délivre le premier rapport de transmission, une vitesse de rotation de l'arbre de sortie est supérieure ou égale à 300 tr/min et inférieure ou égale à 800 tr/min.

10. L'outil de sortie de couple selon la revendication 1, comprenant en outre une bague de réglage de couple (50) montée sur une extrémité avant du carter d'engrenage et capable de se déplacer en avant et en arrière sur le carter d'engrenage ; un support d'élément élastique (60) connecté à la bague de réglage de couple ; et un élément élastique (70) disposé sur le support d'élément élastique, le support d'élément élastique étant au moins partiellement monté sur la bague de réglage de couple de sorte que le support d'élément élastique chevauche au moins partiellement la bague de réglage de couple dans la direction radiale du premier axe.

11. L'outil de sortie de couple selon la revendication 1, dans lequel le moteur comprend un ensemble stator (112) et un ensemble rotor (113), l'ensemble rotor comprenant un manchon de rotor (1131) et des aimants permanents (1132), les aimants permanents étant montés sur le manchon de rotor, le manchon de rotor étant configuré pour être monté à l'extérieur de l'ensemble stator, et une vitesse de rotation en sortie du moteur étant configurée pour être supérieure ou égale à 6400 tr/min et inférieure ou égale à 30000 tr/min.

12. L'outil de sortie de couple selon la revendication 11, dans lequel le premier rapport de transmission est supérieur ou égal à 16 et inférieur ou égal à 36.

13. L'outil de sortie de couple selon la revendication 1, dans lequel le boîtier comprend un boîtier avant (121) dans lequel le moteur et l'ensemble de transmission sont disposés ; et une poignée (122) connectée au boîtier avant et utilisée pour être tenue par un utilisateur ; une longueur du boîtier avant dans la direction axiale du premier axe étant configurée pour être supérieure ou égale à 80 mm et inférieure ou égale à 120 mm.

14. L'outil de sortie de couple selon la revendication 1, dans lequel un diamètre d'un cercle de tête du pignon solaire (230) est inférieur à un diamètre d'un cercle de tête de chacun des premiers satellites (211).

15. L'outil de sortie de couple selon la revendication 1, dans lequel un nombre de dents d'engagement de chacun des premiers satellites (211) est supérieur à un nombre de dents d'engagement du pignon solaire (230).
